# DEMANDE DE BREVET EUROPEEN

(11) **EP 4 434 866 A1**
(43) Date de publication de la demande: **25.09.2024**
(21) Numéro de dépôt: 24158068.7
(22) Date de dépôt: 16.02.2024
(51) Int. Cl.: B62K 27/00, B62K 27/06

(54) **REMORQUE POUR CYCLE**

(30) Priorité: 22.03.2023 FR 2302661
(71) Demandeur: Solar Moov System, 28400 Souancé-au-Perche (FR)
(72) Inventeur: Quéau, Jean-Marc, 92500 Rueil Malmaison (FR); Devot, Guillaume, 13920 SAINT-MITRE-LES-REMPARTS (FR)
(74) Mandataire: Cabinet Chaillot

(57) **Abrégé**

L'invention concerne une remorque (100) destinée à être tractée par un cycle, comprenant :
- une coque (110) présentant une paroi avant, la coque (110) présentant une symétrique par rapport à un plan médian vertical (P) ;
- au moins une roue (120) montée à rotation sur la coque (110) selon un axe de roulement transversal au plan médian vertical (P), et
- un timon (130) de fixation à un cycle, solidaire de la coque (110), caractérisé en ce que la coque (110) présente une arête (116) de rigidification, l'arête (116) de rigidification présentant une symétrie par rapport au plan médian vertical (P), et en ce que le timon (130) est fixé sur ladite arête (116) de rigidification au niveau de la paroi avant.

## Description

Le domaine de l'invention est celui de la conception et de la fabrication des équipements pour cycles.

Plus précisément, l'invention concerne en particulier une remorque pour cycle.

Qu'ils soient motorisés ou non, les cycles comprennent au moins deux roues montées sur un cadre (également appelé châssis).

Selon un premier type de cycle, les roues sont au nombre de deux et sont montées pivotantes sur le cadre, dans l'alignement l'une de l'autre, à savoir une roue avant et une roue arrière. Ce type de cycle peut être utilisé par un cycliste qui se tient droit, ou couché.

Selon un deuxième type de cycle, les roues sont au nombre de trois, positionnées en un premier train roulant comprenant une unique roue et un deuxième train roulant comprenant deux roues. Le premier train roulant peut être placé à l'avant du cycle et le deuxième train roulant est placé à l'arrière du cycle, ou inversement.

Sur un cycle, les solutions de chargement sont limitées, voire inexistantes.

A titre d'exemple, les vélos qui sont des cycles non motorisés, ou faiblement motorisés lorsqu'ils sont équipés de solutions d'assistance électrique, sont dépourvus de solutions de chargement.

Lorsqu'ils veulent se déplacer en emportant un paquetage, les cyclistes sont généralement obligés de s'équiper d'un sac à dos, ou des sacoches souples amovibles fixées sur un porte bagages ou sur le cadre du cycle.

Or, l'utilisation d'un sac à dos ou de sacoches amovibles pour le port de charge lourdes peut s'avérer inconfortable et altérer le bon équilibre du cycliste.

Pour maximiser l'espace de chargement et minimiser les déséquilibres, certains cyclistes sont équipés de remorques. Les remorques peuvent comprendre une unique roue, ou deux roues.

Ces remorques sont généralement fixées à une tige de selle du cycle ou à l'axe de la roue arrière du cycle.

Lorsqu'elles ne comprennent qu'une unique roue, les remorques sont généralement solidaires du cycle de sorte que lorsque le cycle est incliné pour suivre une courbe, la remorque suit le cycle et s'incline également.

Un premier type de remorques comprend un châssis, généralement réalisé par assemblage de tubes métalliques, le châssis formant une structure sur laquelle est solidarisé un panier permettant de recevoir un sac ou une caisse de voyage.

Un deuxième type de remorques comprend une coque définissant à la fois la structure et l'espace de stockage.

Pour fabriquer les remorques du deuxième type, deux demi-coques sont réalisées par stratification au contact puis assemblées pour former la coque.

Une telle fabrication s'avère particulièrement longue et coûteuse et incompatible avec une production industrialisée.

Par ailleurs, la fixation d'accessoires, par exemple un timon de fixation au cycle, une béquille ou encore un panneau solaire, nécessitent de percer la coque afin de permettre le passage de vis.

L'invention a notamment pour objectif de pallier les inconvénients de l'art antérieur.

Plus précisément, l'invention a pour objectif de proposer une remorque dont la fabrication est simple, rapide et industrialisable dans le but de réduire le temps et les coûts de fabrication.

L'invention a également pour objectif de fournir une telle remorque qui offre des solutions de fixation d'accessoires qui ne fragilisent pas la remorque.

Ces objectifs, ainsi que d'autres qui apparaîtront par la suite, sont atteints grâce à l'invention qui a pour objet une remorque destinée à être tractée par un cycle, comprenant :
- une coque s'étendant selon une direction longitudinale et formant un volume interne délimitée par une paroi inférieure, une paroi supérieure et une ceinture reliant la paroi inférieure à la paroi supérieure et présentant une paroi avant, la coque présentant une symétrique par rapport à un plan médian vertical ;
- au moins une roue montée à rotation sur la coque selon un axe de roulement transversal au plan médian vertical, et
- un timon de fixation à un cycle, solidaire de la coque,
   caractérisé en ce que la coque présente une arête de rigidification faisant saillie hors du volume interne, l'arête de rigidification un s'étendant longitudinalement au moins sur la paroi avant, l'arête de rigidification présentant une symétrie par rapport au plan médian vertical, et en ce que le timon est fixé sur ladite arête de rigidification au niveau de la paroi avant.

L'arête de rigidification permet à la fois de rigidifier la coque et de fixer de fixer le timon sur la coque, ainsi que d'autres accessoires via des interfaces dédiées.

En effet, en faisant saillie du volume interne, l'arête de rigidification rigidifie la coque, notamment pour résister aux efforts de traction et de torsion de la remorque engendrés par sa liaison avec le cycle, ou par les interface de fixation des accessoires.

Par ailleurs, le perçage de l'arête de rigidification pour fixer le timon ne fragilise pas la coque.

Cela s'explique notamment par le fait que les efforts de traction exercés par le timon sur la coque sont réalisés dans une direction dans laquelle s'étend l'arête de rigidification, ce qui permet une reprise des efforts plus importante que lorsque le timon est fixé directement sur la ceinture ou sur l'une des parois de la coque comme c'est le cas pour les remorques de l'art antérieur.

Selon un aspect avantageux, l'arête de rigidification est venue de matière avec la coque.

Cela favorise la résistance de la coque puisqu'il n'y a pas de zone fragile à la jonction entre la coque et l'arête de rigidification.

La transmission des efforts de l'arête de rigidification à la coque ne présente ainsi pas de risques de détérioration de la coque.

Selon un autre aspect avantageux, l'arête de rigidification présente une pluralité de trous permettant le passage de dispositifs de fixation d'accessoires sur la remorque.

Les trous permettent le passage de vis pour la fixation d'accessoires. Par ailleurs, le positionnement des trous peut être défini de sorte à limiter la concentration d'efforts sur la coque. En effet, les trous peuvent être répartis sur l'arête de rigidification de sorte que la fixation et le poids des accessoires soient répartis sur la coque de sorte à limiter l'existence de zones réduites de reprise d'efforts.

Selon un autre aspect avantageux, l'arête de rigidification s'étend également sur la paroi supérieure et la paroi inférieure, et la remorque comprend également un panneau solaire solidaire de la coque par l'intermédiaire d'organes de fixation destinés à être solidarisés à l'arête de rigidification.

Cela permet de garantir une fixation du panneau solaire sans risques d'endommagement de la coque.

Par ailleurs, la présence du panneau solaire permet de générer de l'électricité pouvant servir à différentes utilisations, comme l'alimentation d'une batterie du cycle par exemple.

Selon un autre aspect avantageux, l'arête de rigidification s'étend également sur la paroi supérieure et la paroi inférieure, et la remorque comprend également une béquille solidarisée à l'arête de rigidification par une première extrémité et présentant une deuxième extrémité opposée à la première extrémité et destinée à venir au contact d'un sol dans une position d'utilisation, pour stabiliser la remorque, la béquille présentant une hauteur, mesurée entre la première extrémité et la deuxième extrémité, strictement supérieure à un rayon de la ou chaque roue.

Lorsqu'elle est dans sa position d'utilisation, la béquille permet de surélever la roue arrière du cycle.

Cela s'avère avantageux pour immobiliser l'ensemble cycle et remorque de sorte que le cycle peut être dépourvu de béquille.

Selon un autre aspect avantageux, la ceinture de la coque intègre une trappe d'accès au volume interne.

Une telle trappe permet un accès facile au volume interne tout en assurant la protection du contenu du volume interne. Cette trappe peut également intégrer des moyens de verrouillage et des moyens d'étanchéité permettant de rendre inaccessible le volume interne de la coque 110 tout en le protégeant d'infiltration d'eau par exemple.

Selon un autre aspect avantageux, le timon comprend un premier organe de fixation à l'arête de rigidification, un deuxième organe de fixation à l'arête de rigidification et au moins un organe d'accrochage à un cycle, le ou chaque organe d'accrochage étant distant du premier organe de fixation d'une première distance D1, et distant du deuxième organe de fixation d'une deuxième distance D2 strictement inférieure à la première distance D1.

Le timon est ainsi réversible.

En fonction du sens de montage du timon sur l'arête de rigidification, il est possible d'adapter la hauteur de fixation de la remorque par rapport à la taille du cycle.

Cela permet donc de présenter une remorque dont la paroi inférieure est sensiblement horizontale indépendamment de la taille du cycle, ou presque.

Selon un autre aspect avantageux, la coque est fabriquée par un procédé de rotomoulage.

Le rotomoulage permet d'obtenir une coque de manière simple et rapide.

Par ailleurs, l'utilisation du rotomoulage favorise la cristallisation de la matière plastique, ce qui améliore la résistance mécanique de la remorque.

Enfin, en modulant la quantité de billes en plastiques utilisées pour la fabrication de la remorque par rotomoulage, il est possible de modifier l'épaisseur et donc la solidité de la coque de la remorque, cela afin de répondre à une utilisation pour laquelle est destinée la remorque. Des billes de couleurs peuvent également être utilisées pour obtenir une coque colorée de manière rapide et sans outillage particulier.

Selon un autre aspect avantageux, la coque est fabriquée par assemblage de deux demi-coques thermoformées.

L'assemblage de deux demi-coques permet de limiter l'espace de stockage nécessaire lors de la fabrication de la coque.

Plusieurs demi-coques peuvent être fabriquées et stockées en étant emboîtées les unes dans les autres pour limiter l'encombrement.

En outre, l'assemblage de deux demi-coques offre la possibilité de personnaliser la remorque, chaque demi coque pouvant être fabriquée dans un matériau propre ou avec une teinte différente.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés décrits ci-après.

[Fig. 1] La figure 1 est une représentation schématique en perspective de dessus d'une remorque selon l'invention.

[Fig. 2] La figure 2 est une représentation schématique en de trois quarts arrière de la remorque selon l'invention.

[Fig. 3] La figure 3 est une représentation schématique en vue latérale de la remorque selon l'invention, dans une première configuration d'utilisation.

[Fig. 4] La figure 4 est une représentation schématique en vue latérale de la remorque selon l'invention, dans une deuxième configuration d'utilisation.

[Fig. 5] La figure 5 est un détail à échelle agrandie de la remorque selon l'invention, dans une deuxième configuration d'utilisation.

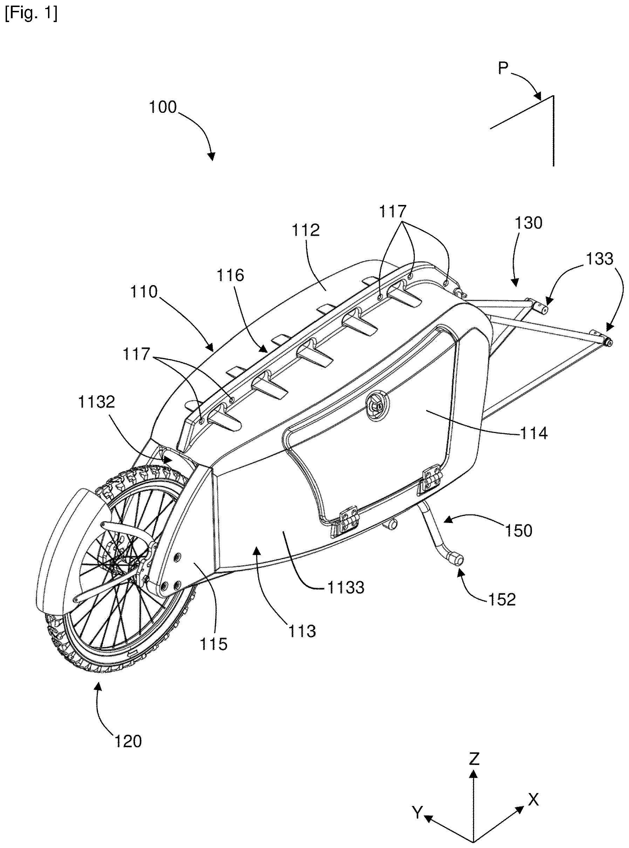

La figure 1 illustre une remorque 100 destinée à être tractée par un cycle 200.

Sur la figure 1, seule la roue arrière du cycle 200 est illustrée. En l'espèce, le cycle 200 est un vélo.

La remorque 100 comprend :
- une coque 110 ;
- au moins une roue 120 montée à rotation sur la coque 110, et
- un timon 130 de fixation à un cycle 200, solidaire de la coque 110, pour permettre à la remorque 100 d'être tractée par un cycle 200.

La coque 110 s'étend selon une direction longitudinale. La direction longitudinale est confondue avec une direction de déplacement général en marche avant du cycle 200.

La coque 110 forme un volume interne délimitée par une paroi inférieure 111, une paroi supérieure 112 et une ceinture 113 reliant la paroi inférieure 111 à la paroi supérieure 112.

Plus spécifiquement, la ceinture 113 présente une paroi avant 1131, une paroi arrière 1132 opposée à la paroi avant et deux parois latérales 1133 joignant chacune la paroi avant 1131 à la paroi arrière 1132.

La ceinture 113 de la coque 110, et plus particulièrement l'une des parois latérales 1133, intègre une trappe 114 d'accès au volume interne.

Tel que cela est illustré par la figure 1, la coque 110 présente une symétrique par rapport à un plan médian vertical P.

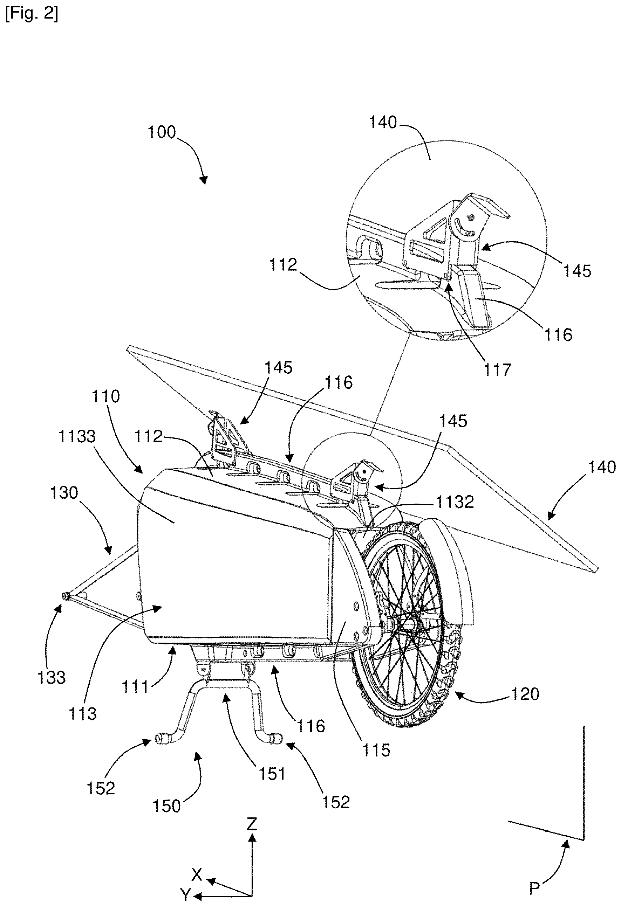

Bien que la coque 110 présente une symétrie, il peut être prévu, comme c'est le cas sur les figures 1 et 2, qu'une seule des deux parois latérales 1133 présente une trappe 114.

Autrement dit, la symétrie s'entend par rapport à la forme générale de la coque 110.

Le terme « vertical » s'entend ici par rapport à un trièdre direct formé par :
- un axe X confondu avec une direction générale d'avancement en marche avant du cycle 200 auquel la remorque 100 est destinée à être accrochée ;
- un axe Y confondu avec une direction transversale à la direction générale d'avancement en marche avant et formant avec l'axe X un plan horizontal sensiblement parallèle à un sol S sur lequel reposée la remorque, et
- un axe Z s'étendant perpendiculairement à l'axe X et à l'axe Y.

Le plan médian vertical P est donc parallèle à un plan formé par les axes X et Z.

La ou chaque roue 120 est montée pivotante sur la coque 110 selon un axe de roulement transversal au plan médian vertical P.

Plus spécifiquement, la coque 110 présente deux pattes de fixation 115 de la ou chaque roue 120. Les deux pattes de fixation 115 s'étendent depuis la paroi arrière 1132, à l'opposé du volume interne.

La ou chaque roue 120 est alors montée pivotante autour d'un axe situé entre les deux pattes de fixation 115.

En outre, la coque 110 présente une arête 116 de rigidification faisant saillie hors du volume interne.

L'arête 116 de rigidification s'étend longitudinalement au moins sur la paroi avant 1131.

Plus particulièrement, tel que cela est illustré par les figures 1 à 4, l'arête 116 de rigidification s'étend sur la paroi supérieure 112, sur la paroi avant 1131 et sur la paroi inférieure 111.

L'arête 116 de rigidification présente une symétrie par rapport au plan médian vertical P.

En référence à la figure 1, l'arête 116 de rigidification présente une largeur définie de sorte à limiter la déformation de la coque 110 sous le poids du contenu du volume interne notamment.

Afin de limiter les zones de fragilité à la jonction entre l'arête 116 de rigidification et la coque 110, l'arête 116 de rigidification est venue de matière avec la coque 110.

Autrement dit, la coque 110 et l'arête 116 de rigidification forment un ensemble monobloc et sont fabriqués dans le même matériau.

Tel que cela est visible sur les figures 2 à 4, l'arête 116 de rigidification présente une pluralité de trous 117 permettant le passage de dispositifs de fixation d'accessoires sur la remorque 100.

Le timon 130, qui permet de solidariser la remorque à une roue arrière d'un cycle 200, est un accessoire.

Le timon 130 est donc fixé sur ladite arête 116 de rigidification.

Plus spécifiquement, le timon 130 est fixé sur l'arête 116 de rigidification au niveau de la paroi avant 1131.

En référence à la figure 2, la remorque 100 comprend également, comme accessoire, un panneau solaire 140 permettant de générer une énergie électrique.

Cette énergie électrique fournie par le panneau solaire 140 peut, en priorité, servir à la recharge de la batterie du cycle lorsque celui-ci est à assistance électrique. Cela rend énergétiquement autonome le cycliste pour le fonctionnement du cycle et de la remorque.

Par ailleurs, l'énergie électrique fournie par le panneau solaire 140 peut servir à l'alimentation électrique d'appareils électriques de faible puissance, par exemple un dispositif lumineux de signalisation (non représenté), un téléphone portable, une tablette tactile, un ordinateur, un drone, un appareil photo ou encore une glacière portative.

Une batterie de stockage de l'énergie électrique produite peut d'ailleurs être prévue dans le volume interne.

Le panneau solaire 140 est solidarisé à la coque par l'intermédiaire d'organes de fixation 145 destinés à être solidarisés à l'arête 116 de rigidification.

Outre la solidarisation du panneau solaire 140 sur la coque 110, les organes de fixation 145 permettent de régler l'orientation du panneau solaire 140 par rapport à la coque 110 pour optimiser la surface de captation du rayonnement solaire offerte par le panneau solaire 140.

La remorque 100 comprend également une béquille 150 formant un autre accessoire.

La béquille 150 est solidarisée à l'arête 116 de rigidification par une première extrémité 151.

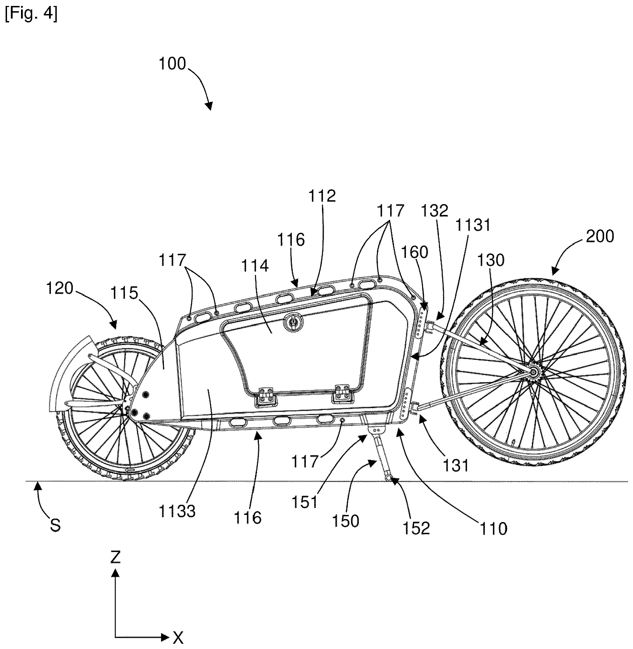

La béquille 150 présente une deuxième extrémité 152 opposée à la première extrémité 151 et destinée à venir au contact du sol S dans une position d'utilisation de la béquille 150, tel qu'illustré par la figure 4.

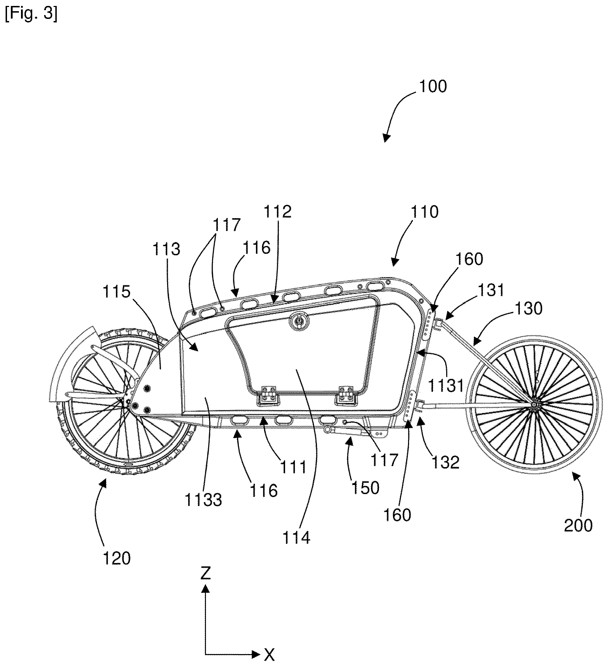

Au contraire, en référence à la figure 3, la béquille 150 est dans une position de rangement dans laquelle la deuxième extrémité 152 est distante du sol S.

Plus précisément, dans la position de rangement, la deuxième extrémité 152 de la béquille 150 est au voisinage de la paroi inférieure 111 de la coque 110, ou quasiment.

Dans sa position d'utilisation, la béquille 150 permet de stabiliser la remorque 100.

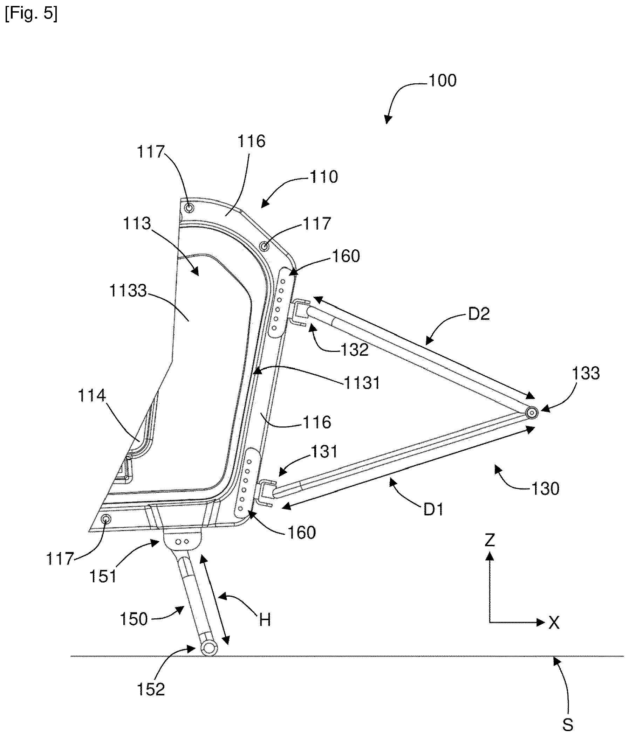

En référence à la figure 4, la béquille 150 présentant une hauteur H (visible sur la figure 5), mesurée entre la première extrémité 151 et la deuxième extrémité 152, strictement supérieure à un rayon de la ou chaque roue 120.

Tel que cela est visible sur la figure 4, cette différence entre la hauteur de la béquille 150 et le rayon de la ou chaque roue 120 permet de surélever le timon 130, et donc la roue arrière d'un cycle 200 du sol S lorsque la béquille 150 est dans sa position d'utilisation.

Tel que cela est visible sur la figure 1, la béquille 150 présente une forme de U inversé présentant une base depuis laquelle s'étendent deux bras.

La base du U, forme la première extrémité 151.

La deuxième extrémité 152 présente deux pieds destinés à venir au contact du sol S, chaque pied étant porté par l'un des bras du U.

En référence aux figures 1, 3 et 4, le timon 130 comprend un premier organe de fixation 131 à l'arête 116 de rigidification, un deuxième organe de fixation 132 à l'arête 116 de rigidification et au moins un organe d'accrochage 133 à un cycle 200.

Plus exactement, tel que cela est visible sur la figure 1, le timon 130 comprend deux organes d'accrochage 133 destinés à venir chacun d'un côté d'une roue arrière du cycle 200 sur lequel la remorque 100 est destinée à être accrochée.

En référence à la figure 5, le ou chaque organe d'accrochage 133 est distant du premier organe de fixation 131 d'une première distance D1, et distant du deuxième organe de fixation d'une deuxième distance D2 strictement inférieure à la première distance D1.

Cela permet de rendre le timon 130 réversible pour l'adapter à différentes tailles de roue arrière de cycles 200 et ainsi conserver une orientation sensiblement horizontale de la paroi inférieure 111 lorsque la béquille 150 est dans sa position de rangement.

Par ailleurs, tel que cela est visible sur les figures 3 et 4, le timon 130 est solidarisé à l'arête 116 de rigidification par l'intermédiaire de deux cavaliers 160.

Chaque cavalier 160 est destiné à recevoir l'un du premier organe de fixation 131 et du deuxième organe de fixation 132.

Des moyens de fixation ad hoc du premier organe de fixation 131 et du deuxième organe de fixation 132 aux cavaliers 160 peuvent être prévus.

Tel que cela est illustré par la figure 5, chaque cavalier 160 présente une pluralité d'ouvertures permettant son positionnement précis sur l'arête 116 de rigidification, de sorte à améliorer l'adaptabilité de la remorque 100 à différentes tailles de cycles 200.

Afin de garantir une remorque 100 légère tout en présentant une résistance mécanique importante, deux procédés de fabrication peuvent être utilisés.

Selon un premier procédé de fabrication, la coque 110 est fabriquée par un procédé de rotomoulage.

Cela permet d'obtenir une coque 110 en un seul élément et présentant une épaisseur la plus fine possible tout en assurant la tenue mécanique souhaitée.

Selon un deuxième procédé de fabrication, la coque 110 est fabriquée par assemblage de deux demi-coques thermoformées.

Ce type de procédé de fabrication offre une personnalisation accrue de la remorque 100 en ce que la coque 110 peut être réalisée par assemblage de deux demi-coques ayant chacune une couleur et/ou une matière différente de l'autre demi-coque.

Dans le cas de deux demi-coques, chaque demi-coque porte une partie de l'arête 116 de rigidification.

## Revendications

1. Remorque (100) destinée à être tractée par un cycle (200), comprenant :
- une coque (110) s'étendant selon une direction longitudinale et formant un volume interne délimitée par une paroi inférieure (111), une paroi supérieure (112) et une ceinture (113) reliant la paroi inférieure (111) à la paroi supérieure (112) et présentant une paroi avant (1131), la coque (110) présentant une symétrique par rapport à un plan médian vertical (P) ;
- au moins une roue (120) montée à rotation sur la coque (110) selon un axe de roulement transversal au plan médian vertical (P), et
- un timon (130) de fixation à un cycle (200), solidaire de la coque (110), **caractérisé en ce que** la coque (110) présente une arête (116) de rigidification faisant saillie hors du volume interne, l'arête (116) de rigidification et s'étendant longitudinalement au moins sur la paroi avant (1131), l'arête (116) de rigidification présentant une symétrie par rapport au plan médian vertical (P), et **en ce que** le timon (130) est fixé sur ladite arête (116) de rigidification au niveau de la paroi avant (1131).

2. Remorque (100) selon la revendication 1, **caractérisée en ce que** l'arête (116) de rigidification est venue de matière avec la coque (110).

3. Remorque (100) selon l'une quelconque des revendications précédentes, **caractérisée en ce que** l'arête (116) de rigidification présente une pluralité de trous (117) permettant le passage de dispositifs de fixation d'accessoires sur la remorque (100).

4. Remorque (100) selon la revendication précédente, **caractérisée en ce que** l'arête (116) de rigidification s'étend également sur la paroi supérieure (112) et la paroi inférieure (111), et la remorque (100) comprend également un panneau solaire (140) solidaire de la coque (110) par l'intermédiaire d'organes de fixation (145) destinés à être solidarisés à l'arête (116) de rigidification.

5. Remorque (100) selon l'une quelconque des revendications précédentes, **caractérisée en ce que** l'arête (116) de rigidification s'étend également sur la paroi supérieure (112) et la paroi inférieure (111), et la remorque (100) comprend également une béquille (150) solidarisée à l'arête (116) de rigidification par une première extrémité (151) et présentant une deuxième extrémité (152) opposée à la première extrémité (151) et destinée à venir au contact d'un sol (S) dans une position d'utilisation, pour stabiliser la remorque (100), la béquille (150) présentant une hauteur (H), mesurée entre la première extrémité (151) et la deuxième extrémité (152), strictement supérieure à un rayon de la ou chaque roue (120).

6. Remorque (100) selon la revendication 3, **caractérisée en ce que** la ceinture (113) de la coque (110) intègre une trappe (114) d'accès au volume interne.

7. Remorque (100) selon l'une quelconque des revendications précédentes, **caractérisée en ce que** le timon (130) comprend un premier organe de fixation (131) à l'arête (116) de rigidification, un deuxième organe de fixation (132) à l'arête (116) de rigidification et au moins un organe d'accrochage (133) à un cycle (200), le ou chaque organe d'accrochage (133) étant distant du premier organe de fixation (131) d'une première distance (D1), et distant du deuxième organe de fixation (132) d'une deuxième distance (D2) strictement inférieure à la première distance (D1).

8. Remorque (100) selon l'une quelconque des revendications précédentes, **caractérisée en ce que** la coque (110) est fabriquée par un procédé de rotomoulage.

9. Remorque (100) selon l'une quelconque des revendications 1 à 8, **caractérisée en ce que** la coque (110) est fabriquée par assemblage de deux demi-coques thermoformées.
